# EUROPEAN PATENT APPLICATION

(11) **EP 1 508 417 A1**
(43) Date of publication of application: **23.02.2005**
(21) Application number: 03291838.5
(22) Date of filing: 24.07.2003
(51) Int. Cl.: B28C 7/04, B01F 15/04, B01F 5/24, B01F 15/00, G05D 11/13

(54) **Blending system**

(71) Applicant: SERVICES PETROLIERS SCHLUMBERGER, 75007 Paris (FR); Schlumberger Technology B.V., 2514 JG Den Haag (NL); SCHLUMBERGER HOLDINGS LIMITED, Road Town, Tortola (VG)
(72) Inventor: Vermet, Frank, 75019 Paris (FR); Diosse, Jean-Michel, 69530 Brignais (FR)
(74) Representative: Weihs, Bruno

(57) **Abstract**

A method, for obtaining a mix of a plurality of matters in a fluid state comprises providing for a first matter of the plurality of matters a first flow of matter. For each matter of the plurality of matters distinct from the first matter, a flow of matter is provided at a determined flow rate. The method further comprises gathering each flow of matter at an inlet of a mixer, the mixer continuously producing at an outlet a substantially homogeneous flow of matter corresponding to the mix.

## Description

### Background of Invention

### Field of the Invention

The present invention relates to a system for blending materials. In particular it relates to a system for blending materials that go to make up a cement slurry such as may be used in a well cementing operation.

### Background Art

Obtaining fluid mixtures often involves blending a plurality of materials according to a predetermined mixture recipe. The materials may, for example, be liquids, gels, or solids in particulate and/or powder form. The mixture recipe typically indicates the ratio of each product. Hence, to obtain any final quantity of the mixture it is necessary to determine for each product a respective required quantity.

The blending is often a sequential process. At first the required quantity for each of the materials is measured, e.g., by weight or by volume. The products are then poured into a mixing device, either one after the other or together, where they are mixed. This may for example be achieved mechanically, for example by stirring the materials with rotating blades. When one or more of the materials are in a particulate or powder form, the blending may comprise one or more weighing and mechanical mixing steps.

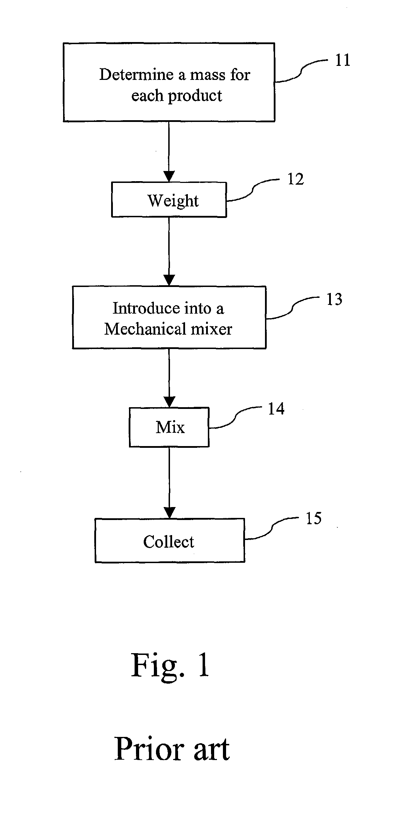

Blending as a sequential process is commonly performed for preparing oilfield cement blends. An example of preparation of cement blends is illustrated by a flowchart in FIG 1. For each product, the mass of the product necessary for forming a batch is determined (**11**) corresponding to the ratio of the product indicated in the mix recipe. Then for each product, the predetermined mass is provided by weighing out the appropriate amount of product (**12**). Finally, the weighed amounts are introduced (**13**) into a mechanical mixer. The mechanical mixer may be a screw rotating inside of a cylinder or a rotary drum. The products are mechanically mixed (**14**), forming a resulting cement blend that is eventually collected (**15**).

### Summary of Invention

In a first aspect the invention provides a method for obtaining a cement mixture comprising cement and at least one other material in solid particulate or powder form, the method comprising providing a flow of cement at a predetermined flow rate. For each of the other materials, a separate flow is provided at a respective predetermined flow rate. The method further comprises gathering each flow at an inlet of a mixer, the mixer continuously producing at an outlet a substantially homogeneous flow of the mixture.

In a first preferred embodiment, for each component of the mixture, the predetermined flow rate and the respective predetermined flow rates correspond to the ratio of the cement and other materials in a mixture recipe.

In a second preferred embodiment, the flows of cement and other materials are dispersed inside the mixer.

In a third preferred embodiment, dispersion is achieved by providing at least one static obstacle in the flows.

In a fourth preferred embodiment, is the cement and other materials are conveyed to the inlet of the mixer by gravity.

In a fifth preferred embodiment, the method further comprises monitoring an effective flow rate of the other material(s). This effective flow rate of is regulated at the predetermined flow rate for that material.

In a sixth preferred embodiment, the method further comprises monitoring an effective first flow rate of the cement. For each other material, a value of a calculated flow rate is calculated according to a value of the effective first flow rate and according to ratios of the components of the mixture. The flow rates of the other materials are regulated to the corresponding value of the calculated flow rate.

In a seventh preferred embodiment, air is injected into a component of the mixture stored in a container to render it flowable.

Preferably the mixture is blended with water to form a slurry and the slurry is pumped into an annulus of a well.

In a second aspect the invention provides an apparatus for preparing a cement mixture comprising cement and at least one other material in particulate or powder form, the apparatus comprising a first flow generator for a cement. The first flow generator allows a flow of cement to be obtained. The apparatus further comprises a flow rate generator respectively for each other material. Each flow rate generator respectively allows a flow of a component of the mixture to be obtained at a predetermined flow rate. A mixer comprising a flow inlet and a flow outlet continuously receives a global flow corresponding to the sum of the flows of the components of the mixture. The mixer continuously produces a substantially homogeneous flow ofthe mixture.

In an eighth preferred embodiment, a gathering system collects the flow of each component of the mixture from its flow generator to obtain the global flow. The gathering system guides the global flow to the flow inlet.

In a ninth preferred embodiment, the mixer comprises a main body and dispersing means statically mounted inside the main body so as to present an obstacle to the global flow entering the inlet.

In a tenth preferred embodiment, at least one flow is conveyed from the corresponding flow rate generator to the outlet by gravity.

In an eleventh preferred embodiment, the cement flow rate generator allows to the flow of cement to be obtained at a first predetermined flow rate.

In a twelfth preferred embodiment, the apparatus further comprises a Man Machine Interface to input a mixture recipe. Processing means calculate a flow rate for each component of the mixture from a ratio of the components in a mixture recipe.

In a thirteenth preferred embodiment, a sensor system measures a value of an effective flow rate of a component of the mixture. The sensor system produces a sensor signal indicative of the value of the effective flow rate of the component. The apparatus further comprises an adjustable valve. The effective flow rate of the component is adjusted depending on an opening of the adjustable valve. The adjustable valve and the sensor define a loop. The flow rate of the component is regulated to the predetermined flow rate using the sensor signal to cause the valve to be adjusted.

In a fourteenth preferred embodiment, a plurality of sensor systems measures values of an effective flow rate of each component of the mixture. For each component, the sensor system produces a sensor signal indicative of the value of the effective flow rate thereof. Calculating means calculate a value of a calculated flow rate for each other material according to a value of the effective flow rate of the cement and according to ratios of the components in the recipe. The apparatus further comprises at least one adjustable valve. The effective flow rate of each other material is adjusted depending on an opening of the adjustable valve. For each other material, the corresponding adjustable valve and the corresponding sensor system define a loop. The flow rate of each other material is regulated according to the corresponding calculated flow rate.

In a fifteenth preferred embodiment, the apparatus further comprises a hopper for storing each component of the mixture. A flow rate generator is mounted at an exit of each hopper.

In a sixteenth preferred embodiment, a pneumatic hammer is provided to render a component stored in a hopper flowable.

In a eighteenth preferred embodiment, a Solid Fraction Monitoring system is provided to blend the cement mixture with water.

Other aspects and advantages of the invention will be apparent from the following description and the appended claims.

### Brief Description of Drawings

The invention will now be described in greater detail with reference to the accompanying drawings, in which:

Figure 1 is a flowchart illustrating an example of a prior art cement blending process;

Figure 2 is a flowchart illustrating an example embodiment of the present invention;

Figure 3 illustrates an example embodiment of an apparatus according to the present invention;

Figure 4 illustrates an example of a mixer according to the invention;

Figure 5 illustrates an example of a control system;

Figure 6 is an example flowchart illustrating a control system.

Figure 7 is an example flowchart illustrating another control system.

### Detailed Description

The same references will be used to reference the same elements in the Figures throughout the description.

The cement blending known from the prior art is a sequential process, during which each product is weighed before being poured into the mixing device. When such cement blending is repeated to produce several batches, the batches may not be perfectly identical. For this reason, a production quality for cement blended in the sequential process may vary from one batch to another.

The present invention allows to obtain a substantially constant production quality when blending cement. The present invention may produce identical batches, or a continuous flow of blend for any quantity of cement mixture.

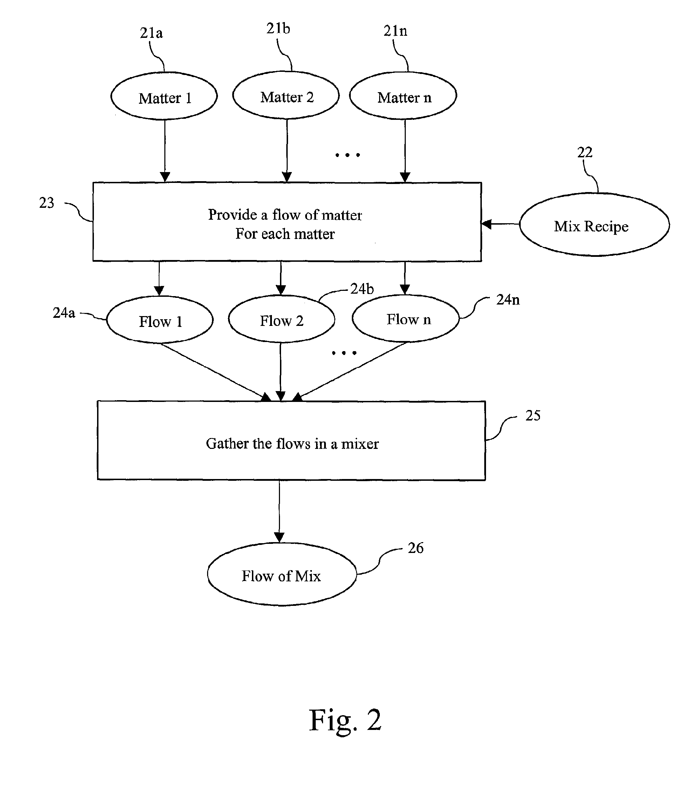

FIG 2 provides a flowchart illustrating an example of the present invention. A first flow of cement **21**_{**a**} is provided. For each other material (**21**_{**b**}**,...21**_{**n**}), for example low density particulate materials such as micro-spheres, fine particulate materials such as micro-silica, etc., a separate flow is provided (**23**) at a predetermined flow rate. The flow rate of each component of the mixture (**24**_{**a**}**, 24**_{**b**}**,...24**_{**n**}) corresponds to the ratio of the components in the mixture recipe (**22**). For example, the mixture recipe (**22**) may indicate that for preparing 600 kg of the cement blend, it is necessary to mix 200 kg of cement with 400 kg of a second product. According to the present example, the flow of thecement and a flow of the second product are provided, the flow rate of the second product being twice as high as the flow rate of the cement. In this example, the flow rate of each component (**24**_{**a**}**, 24**_{**b**}**,...24**_{**n**}) is a mass flow rate. For a volume flow rate, it is necessary to take into consideration a density of each matter when calculating the rate of the flow.

The flows of the various components (**24**_{**a**}**, 24**_{**b**}**,...24**_{**n**}) are gathered in a mixer (**25**), thus forming a global flow. The flows are continuously blended: the mixer continuously produces at an outlet a substantially homogeneous flow. Since the flow rates of each component respectively have a determined value corresponding to the ratio of the component in the mixture recipe, the substantially homogeneous flow corresponds to the mixture (**26**) of the recipe (**22**).

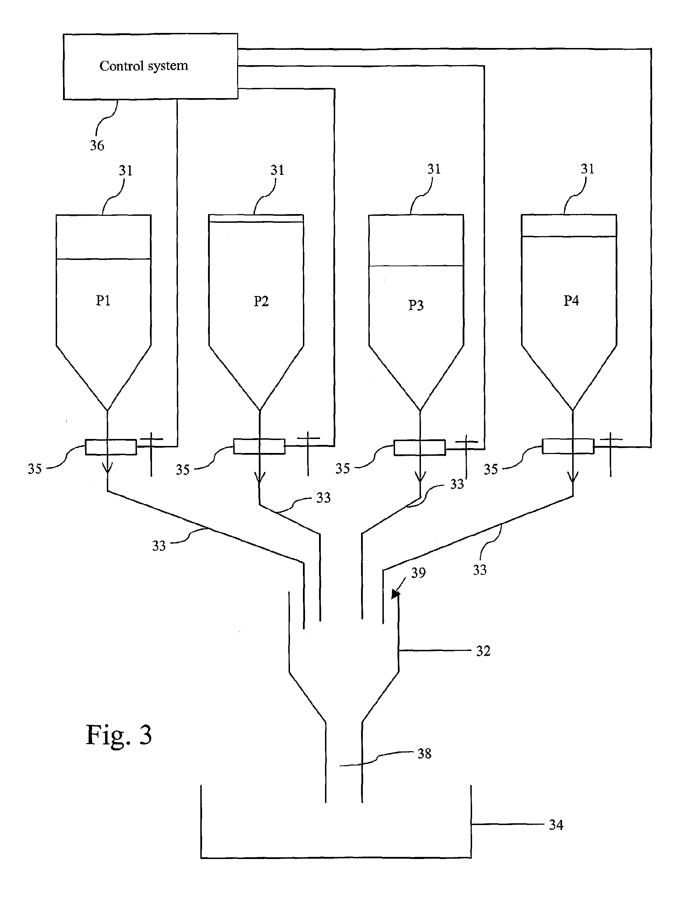

FIG 3 shows a schematic illustration of an example apparatus according to the present invention. In this embodiment, four products (**P**_{**1**}**, P**_{**2**}**, P**_{**3**}**, P**_{**4**}) are blended so as to prepare the cement blend. Each product is in a powder form and is stored in a hopper (**31**).

For each flow, the determined flow rate is calculated according to the ratio of the product indicated in the mixture recipe. For each product, the flow is provided at the predetermined flow rate; the flow rate of each product is controlled using an adjustable valve (**35**).

The flows are collected and simultaneously discharged into a mixer (**32**). In this embodiment, the mixer (**32**) contains dispersing means (not represented on the figure) that causes dispersion of the gathered flows , which facilitates the blending of the products. The flow produced at the outlet of the mixer is thus rendered substantially homogeneous by the gathering and the dispersing in the mixer (**32**).

In this embodiment, each of the four products is conveyed from the hopper to an inlet (**39**) of the mixer (**32**) by gravity respectively through a pipe (**33**). Each flow rate may be individually adjusted depending on an opening of the adjustable valve (**35**). The opening may be controlled manually, or automatically, using a control system (**36**). The control system (**36**) in this embodiment calculates for each product the flow rate corresponding to the ratio of the product in the mixture recipe and controls the opening of each adjustable valve.

As the products are conveyed by gravity to the inlet (**39**) of the mixer (**32**), particles of each product gain sufficient velocity for generating a chaotic flow at the dispersing means, without requiring any movement of the dispersing means. The dispersing means may comprise a plurality of static obstacles that are mounted inside the mixer. The flows of products are dispersed as their particles collide with the static obstacles. The gathering and the subsequent dispersion of the flows of matters provide a mixing of the products to obtain the cement blend. The products are blended without any movement of the mixer (32), and more precisely without any movement of the static obstacles mounted therein.

Before being conveyed to the mixer, each product is respectively stored in a hopper (**31**). Preferably the hoppers (**31**) are re-filled from time to time in order to assure that the flows of matter remain uninterrupted. In another example, the hoppers are continuously fed, the feeding being controlled with a feeding control system (not shown in FIG. 3).

Once the products are blended, the resulting mix is evacuated. In this embodiment, the mixer (**32**) includes an outlet (**38**) through which the mix continuously pours away and is collected in a vessel (**34**). The vessel (**34**) contains the batch of blended cement. Once filled, the vessel (**34**) may be transferred to a well site for mixing with water and use. The blend may be provided at a temporary storage location prior to such use.

Alternatively, the resulting mix may be directly blended with water, thus forming a slurry. The blending of the resulting mix with the water may be performed with a Solid Fraction Monitoring system (see, for example, US 6,491,421), or any other continuous or batch water and cement mixing system. The slurry may be directly pumped into an annulus of a well.

The process according to the invention is continuous as opposed to the sequential process from prior art. The batches that are delivered from the system have a constant quality: the production quality does not vary from one batch to the other and is substantially improved as compared to the batches obtained in the Prior Art. Additionally, such process does not require any mechanical action to provide the mixing of the products.

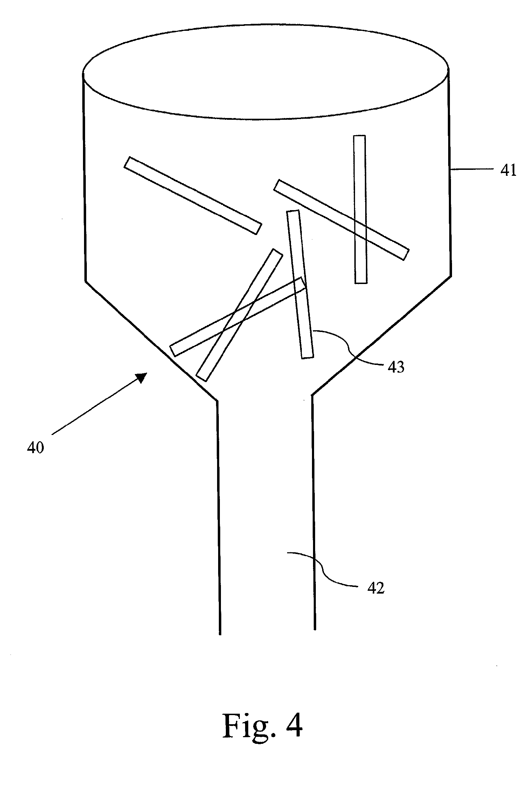

FIG. 4 illustrates an example embodiment of the mixer (**40**). The mixer has a main body (**41**), which in this example is funnel-shaped. The main body (**41**) further comprises the outlet (**42**) and bars (**43**) mounted therein. The bars are installed inside the main body (**41**) to generate a chaos in the flows of mixture components, by scattering of matter. The effect of chaos may be obtained by orienting each bar as appropriate. The flow that is evacuated through the outlet (**42**) is substantially homogeneous and corresponds to the mixture receipe.

In a first alternative embodiment (not represented here), the particles received by the mixer do not have a sufficient velocity to scatter and generate a chaotic flow. The dispersion may be achieved by using propulsion means inside or outside the mixer: for example, the mixer may include an impeller. The flows of matter are continuously poured into the mixer and are dispersed by a rotating movement of the impeller. The mixer thus continuously produces at the outlet the substantially homogeneous flow.

In a second alternative embodiment (not represented here), the mixer does not comprise any static obstacle, nor any propulsion means. The mixer comprises only a main body having an inlet and an outlet. The main body may be funnel-shaped to facilitate the gathering of the flows. The flows may be conveyed by gravity. The velocity of the particles is itself sufficient to create a chaotic dispersion when the flows are gathered. Outputs of the pipes may be close enough to each other so that the poured products merge at a same point, thus providing a mixing of the products. End portions of the pipes may have relative angulations so as to facilitate the gathering of the flows of matter and to disperse the particles. The dispersion and the gathering happen simultaneously in the second alternative embodiment

In a third alternative embodiment (not represented here), the gathering may happen once the flowsr are dispersed. Each flow of matter may for example be dispersed using dispersing means, before being gathered with the other dispersed flows of matter. For example, the outputs of the pipes may be watering can rose shaped, thus generating chaotic flow in each component before gathering the plurality of components to form the mixture.

In a fourth alternative embodiment, a product stored in the hopper, e.g., cement or silica flour, may not naturally flow. A pneumatic hammer may be provided at a corresponding hopper to render the product flowable.

In a fifth alternative embodiment, aproduct stored in the container may be rendered flowable (fluidised) by injecting air or other gas therein.

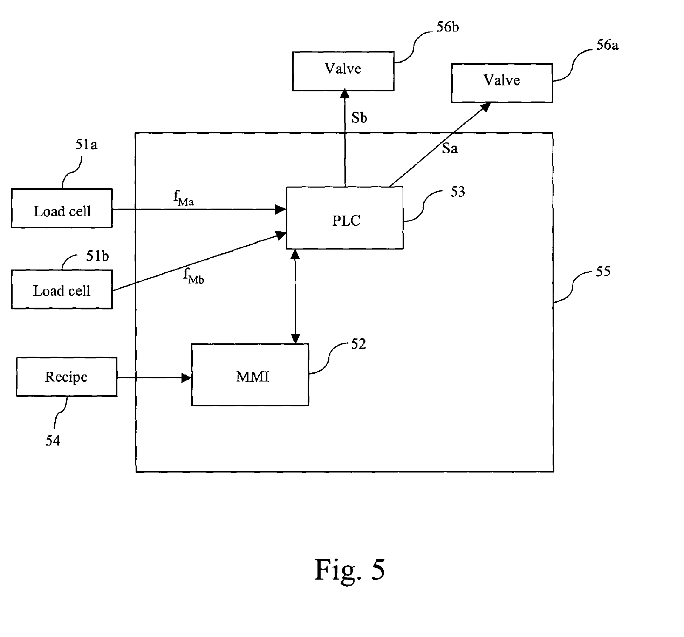

FIG 5 provides a schematic illustration of one example embodiment of the control system, wherein two products are mixed. In this example, the control system (**55**) comprises a Man Machine Interface (**52**) communicating with a Programmable Logic Controller (**53**).

The Man Machine Interface (**52**) allows an operator entering the mixture recipe (**54**), and to exchange orders. For each product, a predetermined flow rate is calculated from the ratio of the product in the mixture recipe.

The Programmable Logic Controller (**53**) regulates the flow rate for each product at the value of the predetermined flow rate. In this example, an effective flow rate of each product depends on an opening of a corresponding valve. The effective flow rate of each flowr may be subject to small variations that are due to uncontrolled parameters. For example, if the matter of a determined product is not perfectly homogeneous, the effective mass flow rate of this product may vary despite the fact that the opening of the corresponding valve does not change. The Programmable Logic Controller (53) regulates the flow rate by controlling the opening of each valve (**56a, 56b**).

The effective flow rate for each product is monitored. For a product in a powder form, a sensor, e.g. a load cell (**51a, 51b**), may be used to provide an effective mass flow rate (**f**_{**Ma**}**, f**_{**Mb**}). The control system (**55**) receives a sensor signal from each load cell (**51a, 51b**). The valves (**56a, 56b**) are controlled by a command signal (**S**_{**a**}**, S**_{**b**}) output by the Programmable Logic Controller (**53**).

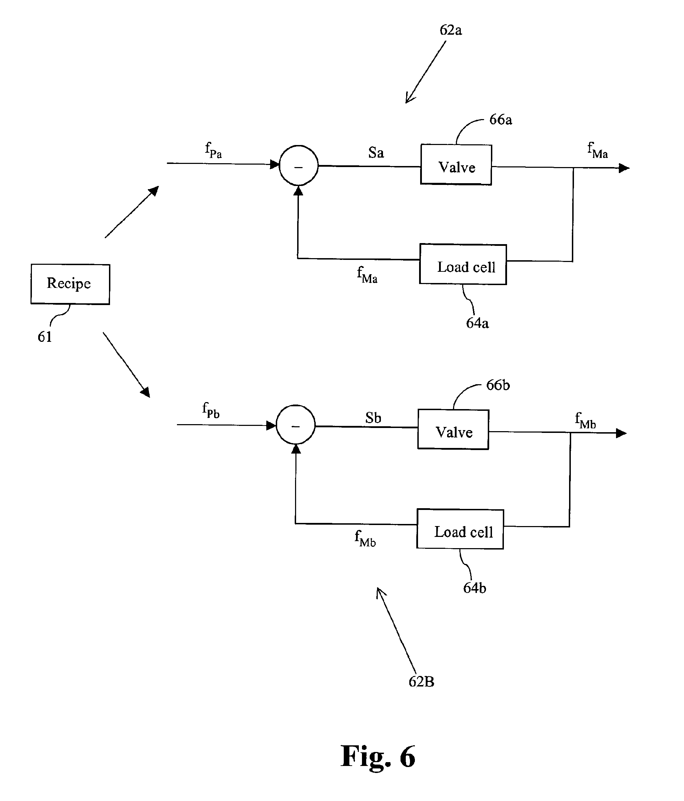

FIG 6 is a flowchart illustrating a function of the control system from FIG. 5. For each product, a loop (**62a, 62b**) is provided to maintain an effective mass flow rate around a value of a predetermined flow rate (**f**_{**Pa**}**, f**_{**Pb**}) corresponding to a ratio of the product in a mixture recipe.

The value of the predetermined flow rate (**f**_{**Pa**}**, f**_{**Pb**}) is calculated for each product according to the mixture recipe (**61**) of the cement blend. A load cell (**64a, 64b**) of a determined product provides a sensor signal (**f**_{**Ma**}**, f**_{**Mb**}) that is indicative of the value of the effective flow rate of the determined product. The value of the effective flow rate is then compared to the value of the predetermined flow rate (**f**_{**Pa**}**, f**_{**Pb**}). The command signal (**S**_{**a**}**, S**_{**b**}) that controls the opening of the adjustable valve (**66a, 66b**) has a value that depends on the difference between the value of the effective flow rate and the value of the predetermined flow rate (**f**_{**Pa**}**, f**_{**Pb**}). If the effective value of the flow rate is higher than the value of the predetermined flow rate (**f**_{**Pa**}**, f**_{**Pb**}), the opening of the valve (**66a, 66b**) is decreased. If the effective value of the flow rate is smaller than the value of the predetermined flow rate (**f**_{**Pa**}**, f**_{**Pb**}), the opening of the valve (**66a, 66b**) is increased. The flow rate of each product is thus maintained at a value corresponding substantially to the predetermined value (**f**_{**Pa**}**, f**_{**Pb**}).

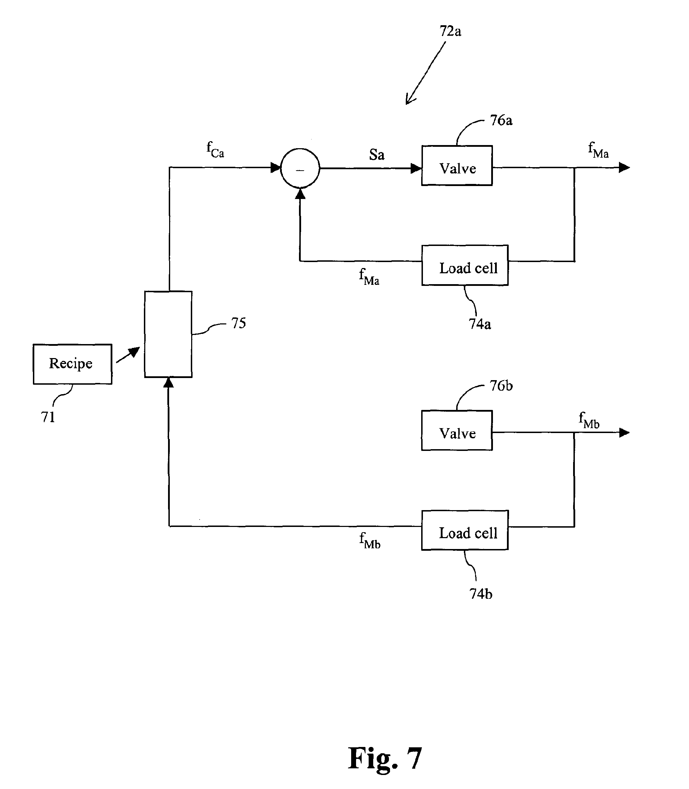

FIG 7 is a flowchart according to an alternative embodiment. A first adjustable valve **(76b)** enables to provide a flow of cement. A first load cell **(74b)** provides a sensor signal (**f**_{**Mb**}) that is indicative of a value of a effective flow rate of the cement. The flow of the cement is not controlled and the flow rate of a second product is monitored to a value that depends on the value of the effective flow rate of cement.

Calculating means (**75**) calculate a flow rate (**f**_{**Ca**}) for the second product according the value of the effective flow rate of cement and according to ratios of the components in the recipe (**71**). For example, the mix recipe (**71**) may indicate that for preparing 600 kg of the cement blend, it is necessary to mix 200 kg of cement with 400 kg of the second product. The cement effective flow rate is monitored. The calculated flow rate (**f**_{**Ca**}) is equal to twice the cement effective flow rate.

A loop (**72a**) is provided to regulate the flow rate of the second product based on a value of the calculated flow rate (**f**_{**Ca**}). The loop (**72a**) comprises a second adjustable valve (**76a**) and a second load cell (**74a**). The second load cell (**74a**) provides a sensor signal (**f**_{**Ma**}) that is indicative of a value of a effective flow rate of the second product. The value of the second effective flow rate is compared to the value of the calculated flow rate (**f**_{**Ca**}). A command signal (**S**_{**a**}) that controls the opening of the second adjustable valve (**76a**) has a value that depends on the difference between the value of the second effective flow rate and the value of the calculated flow rate (**f**_{**Ca**}). If the effective value of the second flow rate is higher than the value of the calculated flow rate (**f**_{**Ca**}), the opening of the second valve **(76a)** is decreased. If the effective value of the second flow rate is smaller than the value of the calculated flow rate (**f**_{**Ca**}), the opening of the second valve **(76a)** is increased. The flow rate of the second product is thus maintained at a value corresponding substantially to the calculated value (**f**_{**Ca**}). The flow rate of each component corresponds to the ratio of the matter in the mixture recipe **71.**

The mixer may be any container being able to receive simultaneously a plurality of flows of matter. The mixer may or may not comprise dispersing means.

The dispersion may be any movement of the particles that facilitate the blending of the flows of matter. The dispersion may be generated because of the velocity of the products when merging. It may also be generated using dispersing means that are not static.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method for obtaining a cement mixture comprising cement and at least one other material in solid particulate or powder form (**21**_{**a**}**, 21**_{**b**}**,...21**_{**n**}), comprising:
providing a flow of cement at a predetermined flow rate;
providing **(23)** for each of the other materials (**21**_{**a**}**, 21**_{**b**}**,...21**_{**n**}), a separate flow (**24**_{**a**}**, 24**_{**b**}**,...24**_{**n**}), at a respective predetermined flow rate;
gathering **(25)** each flow (**24**_{**a**}**, 24**_{**b**}**,...24**_{**n**}) at an inlet of a mixer, the mixer continuously producing at an outlet a substantially homogeneous flow of the mixture **(26).**

2. The method according to claim 1, wherein for each component of the mixture, each predetermined flow rate corresponds to a ratio of the component in the mixture recipe (**22**).

3. The method according to anyone of claims 1 to 2, further comprising:
dispersing the flows inside the mixer.

4. The method according to claim 3, wherein the dispersing comprises:
causing the flows to pass at least one static obstacle inserted in the flows.

5. The method according to anyone of claims 1 to 4 further comprising:
conveying each component to the inlet (**39**) of the mixer (**32**) by gravity.

6. The method according to any preceding claim, further comprising:
monitoring an effective flow rate of a component; and
regulating the effective flow rate of the component at the determined flow rate for that component.

7. The method according to any one of claims 1 to 5, further comprising:
monitoring an effective flow rate of the cement;
calculating for each other material a value of a calculated flow rate according to a value of the effective flow rate of cement and according to ratios of the other materials in the recipe;
regulating the flow rates of each of the other materials to the corresponding value of the calculated flow rate.

8. The method according to any one of claims 1 to 7, further comprising
injecting air into a component stored in a container so as to render the component flowable.

9. The method according to any preceding claim, further comprising:
blending the mixture with water to form a slurry;
pumping the slurry into an annulus of a well.

10. An apparatus for preparing a cement mixture comprising cement and at least one other material in particulate or powder form, comprising:
a first flow generator for a cement, wherein the first flow generator allows a flow of cement to be obtained;
a flow rate generator (**35**) respectively for each other material, wherein each flow rate generator respectively allows a flow of a component of the mixture to be obtained at a predetermined flow rate;
a mixer (**32**) comprising a flow inlet (**39**) and a flow outlet, the mixer (**32**) continuously receiving a global flow corresponding to the sum of the flows of the components of the mixture, and the mixer (**32**) continuously producing a substantially homogeneous flow corresponding to the mixture.

11. The apparatus according to claim 10, further comprising:
a gathering system, wherein the gathering system collects the flow from each flow generator (**35**) to obtain the global flow, and guides the global flow to the flow inlet (**39**).

12. The apparatus according to claim 10 or 11, wherein the mixer (**32**) comprises:
a main body (**41**);
dispersing means (**43**) statically mounted inside the main body (**41**) so as to present an obstacle to the global flow entering the inlet (**39**).

13. The apparatus according to any one of claims 10 to 12, wherein at least one flow is conveyed from the corresponding flow rate generator to the outlet by gravity.

14. The apparatus any one of claims 10 to 13, wherein the cement flow rate generator allows to the flow of cement to be obtained at a first predetermined flow rate.

15. The apparatus according to claim 14, further comprising:
a Man Machine Interface (**52**) to input a mixture recipe;
processing means to calculate for each component of the mixture the predetermined flow rate from a ratio of the components in the mixture recipe.

16. The apparatus according to claim 14 or 15, further comprising:
a sensor system (**64**_{**a**}**, 64**_{**b**}) to measure a value of an effective flow rate of a component of the mixture, the sensor system producing a sensor signal indicative of the value of the effective flow rate of the component;
an adjustable valve (**66**_{**a**}**, 66**_{**b**}), the effective flow rate of the component being adjusted depending on an opening of the adjustable valve; and
wherein the adjustable valve and the sensor define a loop (**62**_{**a**}**, 62**_{**b**}), and the flow rate of the component being regulated to the predetermined flow rate using the sensor signal.

17. The apparatus any one of claims 10 to 13, further comprising:
a plurality of sensor systems to measure values of an effective flow rate of each component of the mixture, the sensor system producing for each matter a sensor signal indicative of the value of the effective flow rate thereof;
calculating means to calculate a value of a calculated flow rate for each other material according to a value of the effective flow rate of the cement and according to ratios of the components in the recipe;
at least one adjustable valve, the effective flow rate of each other material being adjusted depending on an opening of the adjustable valve;
wherein for each other material, the corresponding adjustable valve and the corresponding sensor system define a loop, and the flow rate of each other material is regulated according to the corresponding calculated flow rate.

18. The apparatus according to any one of claims 10 to 17, further comprising a hopper **(31)** for storing each component of the mixture, the flow rate generator **(35)** being mounted at an evacuation exit of each hopper **(31).**

19. The apparatus according to claim 18, further comprising a pneumatic hammer operable to render a component stored in a hopper flowable.

20. The apparatus according to any of claims 10 - 19, further comprising: a further mixing system to blend the mixture with water.
